# EUROPEAN PATENT SPECIFICATION

(11) **EP 2 216 387 B1**
(45) Date of publication and mention of the grant of the patent: **19.12.2012**
(21) Application number: 10152795.0
(22) Date of filing: 05.02.2010
(51) Int. Cl.: C10L 5/44, C10L 5/14, C10L 5/36

(54) **Fuel block such as a hearth block**
Brennstoffblock wie ein Bodenstein
Bloc de combustible tel qu'un bloc de sole

(30) Priority: 06.02.2009 NL 2002504
(43) Date of publication of application: 11.08.2010
(73) Proprietor: De Lange, Houtvezel- en Zaagselhandel B.V., 1646 WJ Ursem (gem. Schermer) (NL)
(72) Inventor: Bruintjes, Egbert, 1446 CZ Purmerend (NL)
(74) Representative: Klavers, Cornelis

(56) References cited:
- EP-A- 1 783 195
- DE-A1- 10 106 211
- DE-A1- 19 537 238
- US-A- 4 828 573
- US-A- 5 374 670

## Description

The present invention relates to a fuel block, such as a hearth block, a patio block or a heat block, comprising combustible components and binder materials, fuel block such as a hearth block, a patio block or a heat block, comprising: combustible components, binder materials, and between 5 and 50 wt.% compressed wood pellets.

Such a fuel block is generally known, it is for example used for being burned in a hearth for the purpose of creating a cosy atmosphere and producing heat. In foreign countries, patio blocks or heat blocks are burned mainly for the purpose of producing extra heat.

A fuel block indicated above is disclosed in DE 195 37 238 A1.

The object of the present invention is to provide an improved block which produces more caloric heat, which produces higher flames upon combustion and which burns longer.

In order to accomplish that object, the fuel block according to the invention is characterised by the features of claim 1.

It has been found that the block according to the invention offers numerous surprising advantages in comparison with blocks having the same weight. Measurements have shown that the block according to the invention provides a higher combustion temperature, as a result of which the emission of smoke, which is harmful to the environment, decreases.

Measurements have furthermore shown that the emission of useful heat to the environment increases by 15-25% upon combustion. As a result, also an improved price/heat ratio is achieved with the block according to the invention.

It has furthermore been found that it was possible to reduce the percentage of oils and fats in the block by partially substituting said substances for the compressed wood pellets whilst nevertheless retaining the advantageous higher calorific value of the block according to the invention. Reduction of the percentage of chemical oils and fats provided the further environmental advantage of a reduced emission of mono-oxides, among other substances, upon combustion.

Measurements furthermore showed that the burning time of the block according to the invention on average increased by 15-30%, whilst it was furthermore found upon measurement that the flame pattern of the block according to the invention included higher flames, even during the entire longer burning time of said block.

A fuel block according to the present invention will now be explained in more detail with reference to the appended figures of the drawing. In the drawing:
Figure 1 is a diagram in which the flame height is plotted against the burning time of a standard block and a block according to the invention, respectively; and
Figures 2 and 3 are diagrams of, respectively, the heat emission - upper curve - and the core temperature - lower curve - as a function of time upon combustion of a standard block and a block comprising pellets according to the invention, respectively.

A fuel block which might have the dimensions and the shape of usual fuel blocks, such as hearth blocks, patio blocks or heat blocks, may comprise the well-known combustible components. Examples of components explicitly mentioned herein include: straw, cellulose, hardboard, paper, compressed paper, charcoal, charcoal powder, molasses, shells of nuts, peanuts, coffee, grasses, seeds, mustard seeds, hay, coconut peat, stalks, textile material, cotton, silicones or other agriculture-related raw materials. In addition to binder materials, among which at least vegetable or animal spoils and/or fats, the block may contain binder materials selected from the group of: various kinds of wax, wax, slackwax, paraffin and/or organic oils.

The block further comprises between 5 and 50 wt.% compressed wood pellets. The wood pellets generally contain white and/or brown compressed wood pulp; in addition to that the pellets may contain components selected from the group consisting of: straw, paper, grasses, hay, coconut peat, stalks, textile material, cotton, silicones or other agriculture-related raw materials. The wood pellets, which are distributed at random over the volume of the block, preferably have an average size ranging between 5 mm and 25 mm, in particular between 5 mm and 10 mm.

The blocks may be packaged individually or in groups of several blocks for sale.

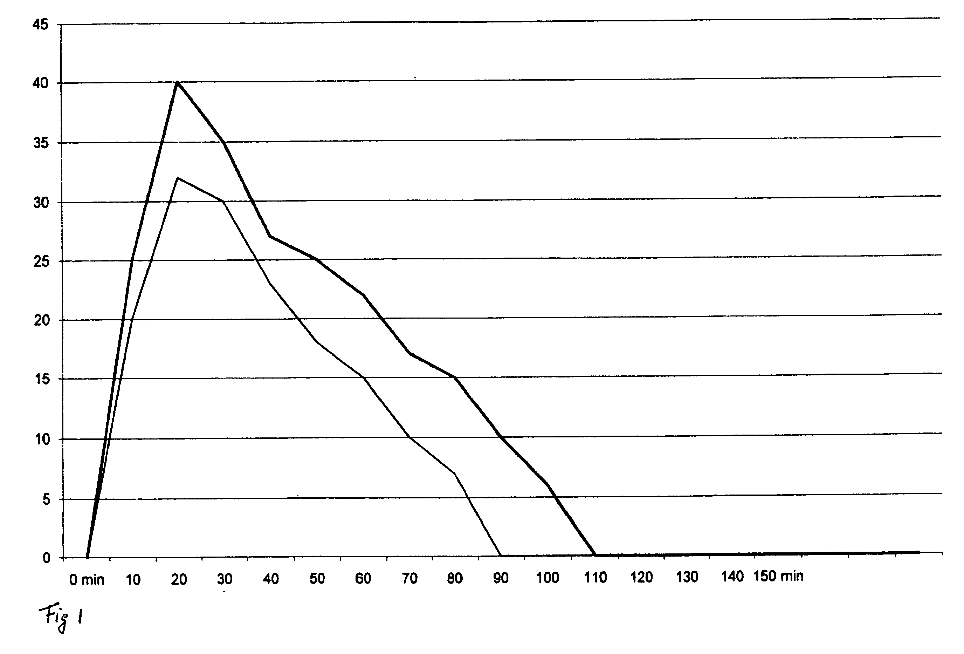

Figure 1 shows a diagram in which the flame height (in centimetres) is plotted against the burning time (in minutes) of a standard block (lower curve) and a block containing the pellets (upper curve), respectively. The block, which weighs 1.1 kg, contains 120 g wood pellets. The block containing the pellets appears to produce flames which are significantly higher than the flames of the standard block during the entire burning time of the block. The test furthermore shows that in spite of the higher flames during the entire burning time, the flame height is on average 20% higher. Moreover, the burning time of the block comprising the pellets has increased by 18 minutes (=14.28%).

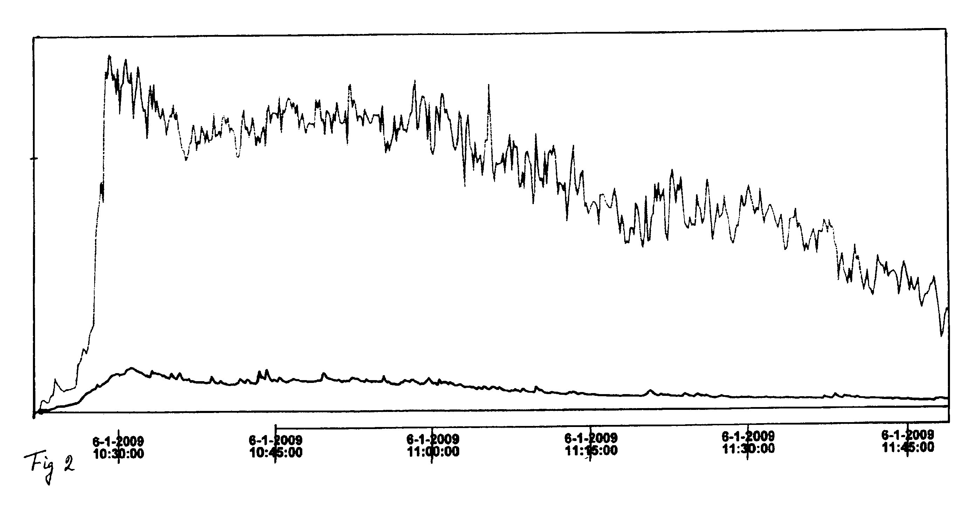

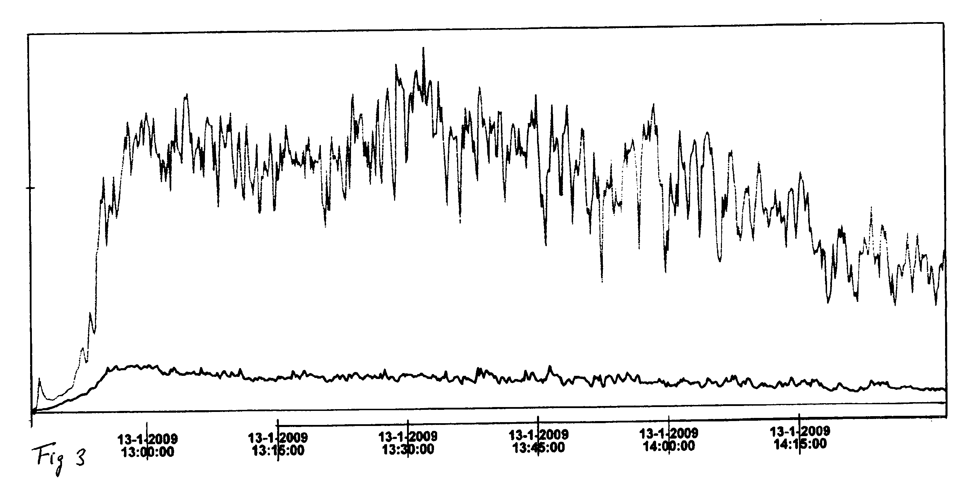

Figures 2 and 3 are diagrams of, respectively, the heat emission - upper curve - and the core temperature - lower curve - as a function of time upon combustion of a standard block (figure 2) and a block comprising pellets (figure 3), respectively.

The diagram of figure 2 shows that a standard block having a weight of 1.1 kg consisting of vegetable oils and/or animal fats, a wax binder and white and/or brown wood pulp not contained in pellets in a random ratio has an average temperature of 433.63 degrees Celsius during the burning time and an average heat emission temperature of 56.40 degrees Celsius during the burning time. This block produces a peak temperature of 693 degrees Celsius and a peak heat emission temperature of 102.40 degrees Celsius. The burning time of said hearth block was 1 hour, 26 minutes and 50 seconds.

The diagram of figure 3 shows that the temperature of the block, in this case comprising the wood pulp pellets, having the same weight of 1.1 kg and for the rest the same composition as the standard block, has an average temperature of 475.45 degrees Celsius during the burning time and an average heat emission temperature of 73.99 degrees Celsius during the burning time. This block provides a peak temperature of 789.20 degrees Celsius and a peak heat emission temperature of 118.20 degrees Celsius. The burning time of this hearth block comprising the pellets was 1 hour, 44 minutes and 50 seconds. From the diagrams it appears that the average temperature of a hearth block comprising pellets is on average 10% higher than that of the standard block, and that the average emission temperature of the hearth block comprising pellets is on average 31% higher than that of the standard block.

The temperature measurements were carried out in a Stoveman smoke box having a width of 70 cm and a height of 120 cm, using a Testo temperature data logger that measures with a degree of precision of ± 0.5 degrees Celsius, using two Pt100 Testo probes. Flame heights were measured by means of a Testo infrared height gauge that measures with a degree of precision of ± 0.01.

## Claims

1. A fuel block such as a hearth block, a patio block or a heat block, comprising:
a) combustible components,
b) binder materials, and
c) between 5 and 50 wt.% compressed wood pellets;
**characterised in that** the binder materials in the fuel block comprise one or more wax kinds, that the fuel block weighs 1.1 kg and contains 120 g wood pellets which contain white and/or brown wood pulp, and that the wood pellets are distributed at random over the volume of the block while having an average size between 5 mm and 10 mm.

2. A block according to claim 1, **characterised in that** the combustible components have been selected from the following components:
- straw, cellulose, hardboard, paper, compressed paper, charcoal, charcoal powder, molasses, shells of nuts, peanuts, coffee, grasses, seeds, mustard seeds or other agriculture-related raw materials.

3. A block according to claim 1 or 2, **characterised in that** the components of the wood pellets have been selected from the following components:
- straw, paper, grasses, hay, coconut peat, stalks, textile material, cotton, silicones or other agriculture-related raw materials.

## Patentansprüche

1. Brennstoffblock, wie beispielsweise ein Kaminblock, ein Brennstoffblock für Terrassen oder ein wärmespendender Block, umfassend:
a) brennbare Komponenten,
b) Bindemittelmaterialien und
c) 5 bis 50 Gew.-% komprimierte Holzpellets;
**dadurch gekennzeichnet, dass** das Bindemittelmaterial in dem Brennstoffblock eine oder mehrere Wachsarten umfasst, dass der Brennstoffblock 1,1 kg wiegt und 120 g Holzpellets enthält, die weiße und/oder braune Holzpulpe enthalten, und dass die Holzpellets willkürlich durch das Volumen des Blocks verteilt sind, während sie eine durchschnittliche Größe zwischen 5 mm und 10 mm aufweisen.

2. Block nach Anspruch 1, **dadurch gekennzeichnet, dass** die brennbaren Komponenten unter den folgenden Komponenten ausgewählt worden sind:
- Stroh, Cellulose, Hartfaserplatte, Papier, komprimiertem Papier, Holzkohle, Holzkohlepulver, Melassen, Nussschalen, Erdnüssen, Kaffee, Gräsern, Samen, Senfsamen oder anderen, mit der Landwirtschaft verbundenen Rohmaterialien.

3. Block nach Anspruch 1 oder 2, **dadurch gekennzeichnet, dass** die Komponenten der Holzpellets unter den folgenden Komponenten ausgewählt worden sind:
- Stroh, Papier, Gräsern, Heu, Kokosnusstorf, Stengeln, Textilmaterial, Baumwolle, Siliconen oder anderen, mit der Landwirtschaft verbundenen Rohmaterialien.

## Revendications

1. Bloc de combustible tel que bloc de sole, bloc de patio ou bloc chauffant, comprenant :
a) des composants combustibles,
b) des matériaux agglomérant, et
c) entre 5 et 50 % en poids de granulés de bois comprimés ;
**caractérisé en ce que** les matériaux agglomérant dans le bloc de combustible comprennent un ou plusieurs types de cire, **en ce que** le bloc de combustible pèse 1,1 kg et contient 120 g de granulés de bois qui contiennent de la pulpe de bois blond et/ou brun, et **en ce que** les granulés de bois sont distribués de façon aléatoire sur le volume du bloc et sont dotés d'une taille moyenne comprise entre 5 mm et 10 mm.

2. Bloc selon la revendication 1, **caractérisé en ce que** les composants combustibles ont été sélectionnés parmi les composants suivants :
- paille, cellulose, carton dur, papier, papier comprimé, charbon, poudre de charbon, mélasse, coques de noix, cacahouètes, café, herbages graminés, graines, graines de moutarde ou autres matières premières liées à l'agriculture.

3. Bloc selon la revendication 1 ou la revendication 2, **caractérisé en ce que** les composants des granulés de bois ont été sélectionnés parmi les composants suivants :
- paille, papier, herbages graminés, foin, tourbe de coco, tiges, matières textiles, coton, silicones ou autres matières premières liées à l'agriculture.
